# EUROPÄISCHE PATENTSCHRIFT

(11) **EP 4 103 979 B1**
(45) Veröffentlichungstag und Bekanntmachung des Hinweises auf die Patenterteilung: **13.09.2023**
(21) Anmeldenummer: 21703350.5
(22) Anmeldetag: 20.01.2021
(51) Int. Cl.: G01V 8/14, G01V 8/22

(54) **LICHTSCHRANKENSYSTEM, UMFASSEND ZUMINDEST ZWEI REFLEXIONS-LICHTSCHRANKENVORRICHTUNGEN**
LIGHT BARRIER SYSTEM, COMPRISING AT LEAST TWO REFLECTION LIGHT BARRIER DEVICES
SYSTÈME DE BARRIÈRE LUMINEUSE COMPRENANT AU MOINS DEUX DISPOSITIFS DE BARRIÈRE LUMINEUSE DE RÉFLEXION

(30) Priorität: 12.02.2020 AT 501082020
(43) Veröffentlichungstag der Anmeldung: 21.12.2022
(73) Patentinhaber: Knapp AG, 8075 Hart bei Graz (AT)
(72) Erfinder: GÜTL, Bernhard, 8075 Hart bei Graz (AT); PENDL, Marc, 8075 Hart bei Graz (AT); MATHI, Franz, 8075 Hart bei Graz (AT)
(74) Vertreter: Schwarz & Partner Patentanwälte GmbH
(86) Internationale Anmeldenummer: PCT/AT2021/060018
(87) Internationale Veröffentlichungsnummer: WO 2021/159156

(56) Entgegenhaltungen:
- EP-A1- 2 237 076
- WO-A2-02/12828
- DE-A1- 10 019 924

## Beschreibung

Die Erfindung betrifft ein Lichtschrankensystem, umfassend zumindest zwei Reflexions-Lichtschrankenvorrichtungen, die jeweils eine Lichtstrahlenquelle zum Aussenden eines Lichtstrahls und einen Sensor zur Detektion des reflektierten Lichtstrahls umfassen. In einem weiteren Aspekt betrifft die Erfindung die Verwendung eines Reflexionskörpers in einem Lichtschrankensystem.

Lichtschrankensysteme werden in unterschiedlichen Anwendungsgebieten eingesetzt und ermöglichen die Überwachung eines Wegabschnitts oder dergleichen. Dazu wird beispielsweise eine Reflexions-Lichtschrankenvorrichtung eingesetzt, welche einen Lichtstrahl auf einen Reflexionskörper wie einen Spiegel aussendet. Der Reflexionskörper reflektiert den Lichtstrahl in dieselbe Richtung zurück, aus welcher der Lichtstrahl auf den Reflexionskörper eingefallen ist. Dadurch kann der reflektierte Lichtstrahl bzw. dessen Ausbleiben durch einen Sensor der Reflexions-Lichtschrankenvorrichtung erfasst werden. Jede Reflexions-Lichtschrankenvorrichtung bildet somit mit ihrem Reflexionskörper ein eigenes Paar. Um mehrere Bereiche eines Wegabschnitts zu überwachen, werden folglich mehrere Paare, bestehend aus der Reflexions-Lichtschrankenvorrichtung und dem Reflexionskörper, entlang des Weges positioniert.

Die Offenbarungsschrift EP 2 237 076 A1, z. B. betrifft ein derartiges Lichtschrankensystem. Das System umfasst zwei Reflexions-Lichtschrankenvorrichtungen, die jeweils dazu ausgebildet sind, einen Lichtstrahl auszusenden und einen reflektierten Lichtstrahl zu detektieren, wobei das Lichtschrankensystem einen Reflexionskörper umfasst.

In einigen Anwendungsgebieten, insbesondere bei Fördersystemen, bei welchen eine Förderstrecke mittels Lichtschranken überwacht werden soll, steht jedoch nur wenig Platz zur Positionierung der Reflexions-Lichtschrankenvorrichtungen bzw. der Reflexionskörper zur Verfügung. Da die Montagepositionen dieser Instrumente zudem schwer zugänglich sind, ist ferner deren Kalibrierung mühsam und zeitaufwändig, da jedes Paar bestehend aus Reflexions-Lichtschrankenvorrichtung und Reflexionskörper eigens kalibriert werden muss. Es ist daher ein Ziel der Erfindung, ein Lichtschrankensystem zu schaffen, welches die Nachteile des Standes der Technik überwindet und insbesondere platzsparend und leicht kalibrierbar ist.

Dieses Ziel wird gemäß der Erfindung mit einem Lichtschrankensystem erzielt, welches zumindest zwei Reflexions-Lichtschrankenvorrichtungen umfasst, die jeweils dazu ausgebildet sind, einen Lichtstrahl auszusenden und einen reflektierten Lichtstrahl zu detektieren, wobei das Lichtschrankensystem einen Reflexionskörper umfasst, der dazu ausgebildet ist, aus zumindest zwei unterschiedlichen Richtungen ausgesandte Lichtstrahlen parallel zurückzureflektieren, welche in einem Winkel von zumindest 20° auseinanderliegen, wobei die zumindest zwei Reflexions-Lichtschrankenvorrichtungen derart angeordnet sind, dass sie Lichtstrahlen aus unterschiedlichen Richtungen auf denselben Reflexionskörper aussenden, um zumindest zwei räumlich unterschiedliche Bereiche zu überwachen.

Dieses Lichtschrankensystem zeichnet sich dadurch aus, dass sich alle Reflexions-Lichtschrankenvorrichtungen einen einzigen Reflexionskörper teilen und daher die Anzahl der Reflexionskörper im System reduziert werden kann. Dies ist insbesondere in jenen Anwendungsgebieten von Vorteil, bei welchen der zur Verfügung stehende Bauraum gering ist.

Neben dem Vorteil der platzsparenden Ausführung hat das erfindungsgemäße Lichtschrankensystem weiters den Vorteil, dass es unempfindlich auf Verdrehung des Reflektors ist, wodurch das Auftreten von Fehlern im Lichtschrankensystem reduziert wird bzw. eine Kalibrierung vereinfacht wird. Der gemeinsame Reflexionskörper hat zudem den Vorteil, dass die Reflexions-Lichtschrankenvorrichtungen im Zuge der Inbetriebsetzung leicht verstellt werden können.

Da der Reflexionskörper des erfindungsgemäßen Lichtschrankensystems zumindest dazu ausgebildet ist, Lichtstrahlen parallel zurück zu reflektieren, die in einem Winkel von zumindest 20° auseinanderliegen, können mehrere unterschiedliche räumliche Bereiche mit einem einzigen Reflexionskörper überwacht werden. Der Reflexionskörper kann beispielsweise eine geeignete Krümmung aufweisen, um alle Lichtstrahlen aus parallel zurück zu reflektieren, die aus diesem Winkelbereich einfallen, oder zumindest zwei ebene Flächen, die ein einem entsprechenden Winkel zueinander stehen. Gleichfalls können die zumindest zwei Reflexions-Lichtschrankenvorrichtungen derart angeordnet sein, dass diese Lichtstrahlen auf den gemeinsamen Reflexionskörper einfallen lassen, in einem Winkel von zumindest 20° auseinander liegen.

Bevorzugt ist der Reflexionskörper dazu ausgebildet, alle ausgesandte Lichtstrahlen parallel zurück zu reflektieren, die in einem vorbestimmten Winkelbereich um eine Achse ausgesandt wurden, wobei der Winkelbereich bevorzugt zumindest 180° beträgt, besonders bevorzugt im Wesentlichen 360°. Dieser Winkelbereich wird auch Reflexionsbereich genannt. Die Achse verläuft dabei bevorzugt durch den Reflexionskörper. Diese Lösung erlaubt, dass die Reflexions-Lichtschrankenvorrichtungen im genannten Winkelbereich frei um den Reflexionskörper positioniert werden können und auch ein nachträgliches Hinzufügen von Reflexions-Lichtschrankenvorrichtungen oder ein Verschieben von Reflexions-Lichtschrankenvorrichtungen im genannten Winkelbereich möglich ist, ohne auf besondere Eigenschaften des Reflexionskörpers Rücksicht nehmen zu müssen. Es versteht sich, dass selbst bei dieser Ausbildung des Reflexionskörpers weiterhin nur eine diskrete Anzahl von Reflexions-Lichtschrankenvorrichtungen vorgesehen werden, z.B. zumindest zwei.

Um die gewünschte Eigenschaft des Reflexionskörpers zu erzielen, dass aus zumindest zwei unterschiedlichen Richtungen ausgesandte Lichtstrahlen parallel zurückreflektiert werden, kann der Reflexionskörper beispielsweise wie folgt ausgeführt werden.

Um zu ermöglichen, dass der Reflexionskörper einen Reflexionsbereich von zumindest 180° und bevorzugt bis zu 360° aufweist, können zwei bevorzugte Ausführungsformen eingesetzt werden. In der ersten bevorzugten Ausführungsform hat der Reflexionskörper eine im Wesentlichen kugelförmige Grundform. Dadurch hat der Reflexionskörper die Eigenschaft, dass nicht nur ein Reflexionsbereich von bis zu 360° um eine beispielswese senkrechte Achse erzielt wird, sondern auch ein Reflexionsbereich von bis zu 360° um eine dazu normale Achse. In dieser Ausführungsform kann der Reflexionskörper bevorzugt als Pentagondodekaeder ausgebildet sein, um eine leichtere Fertigung bzw. verbesserte Reflexionseigenschaften zu erzielen. Der Pentagondodekaeder mit seiner im Wesentlichen kugelförmigen Grundform hat hierbei im Wesentlichen ebene Oberflächen, welche wie unten beschrieben mit Tripelprismen bzw. Reflektorfolien versehen werden können.

In der zweiten bevorzugten Ausführungsform hat der Reflexionskörper eine im Wesentlichen zylindrische Grundform, d.h. er hat eine Grundfläche, die linear extrudiert ist. Dies ermöglicht, dass der Reflexionskörper einen Reflexionsbereich um 360°, beispielsweise um eine senkrechte Achse, aufweisen kann. Ein Reflexionsbereich um Achsen normal zu der genannten Achse kann durch Tripelprismen bzw. Reflektorfolien erzielt werden. Die zylindrische Grundform ermöglicht eine einfachere Fertigung als die kugelförmige Grundform.

Besonders bevorzugt ist bei der Ausführungsform des Reflexionskörpers mit zylindrischer Grundform, wenn diese eine im Wesentlichen kreisförmige Grundfläche hat. Alternativ könnte diese beispielsweise auch oval sein, um in einer Richtung eine größere Auftrefffläche für einfallende Lichtstrahlen zu bieten. Die Grundform bzw. Grundfläche kann in jedem Fall auch durch Knicke angenähert werden und muss nicht stetig sein. Dies ermöglicht beispielsweise, dass Reflektorfolien mit Knicken kleiner dem Reflexionswinkel aneinandergereiht werden können.

Generell könnte der Reflexionskörper eine spiegelglatte Oberfläche aufweisen, beispielsweise bei einer kugelförmigen oder zylinderförmigen Grundform, um zu ermöglichen, dass aus zwei unterschiedlichen Richtungen ausgesandte Lichtstrahlen parallel zurückreflektiert werden. Aufgrund von Fertigungsungenauigkeiten bzw. Abweichungen von einer rein kugelförmigen oder zylinderförmigen Grundform ist jedoch bevorzugt, wenn die Oberfläche des Reflexionskörpers gemäß einer von zwei im Folgenden erläuterten Ausführungsformen ausgestattet ist.

Gemäß der ersten bevorzugten Ausführungsform weist zumindest ein Teil der Oberfläche des Reflexionskörpers eingearbeitete Tripelprismen auf. In dieser Ausführungsform kann die Oberfläche der beispielsweise kugelförmigen oder zylinderförmigen Grundform derart bearbeitet werden, dass diese eine Oberflächenstruktur mit ein oder mehreren Tripelprismen aufweist. Besonders vorteilhaft ist bei dieser Ausführungsform, wenn die Grundform des Reflexionskörpers an eine Kugelform oder Zylinderform angenähert ist, beispielsweise als Pentagondodekaeder oder wenn die Grundfläche der zylinderförmigen Grundform durch Knicke angenähert ist.

Gemäß der zweiten bevorzugten Ausführungsform ist zumindest ein Teil der Oberfläche des Reflexionskörpers mit einer Reflektorfolie bedeckt. Derartige Reflektorfolien sind aus dem Stand der Technik hinreichend bekannt und sind günstig erwerbbar. Dies ermöglicht, dass der Reflexionskörper einfach hergestellt werden kann, indem beispielsweise die Reflektorfolie auf einen nicht oder nicht ausreichend reflektierenden Grundkörper angebracht wird.

Reflektorflächen, die beispielsweise mit Tripelprismen versehen sind, haben gegenüber Reflektorfolien den Vorteil, dass sie besser reflektieren. Reflektorfolien haben jedoch den Vorteil, dass der Reflexionskörper einfacher hergestellt werden kann. Es ist auch möglich, den Reflexionskörper teilweise mit einer Reflektorfolie und teilweise mit einer Reflektorfläche auszustatten, sodass die Vorteile beider Ausführungsformen kombiniert werden können.

Eine besonders einfache Ausführungsform des Reflexionskörpers ist eine Platte, die auf beiden Seiten mit einer Reflektorfläche bzw. Reflektorfolie ausgestattet ist. Hierbei ist jedoch nachteilig, dass einfallende Lichtstrahlen aus spitzen Winkeln schlecht bzw. nicht reflektiert werden können. Insbesondere bei Lichtschrankensystemen in Fördersystemen sind daher verbesserte Reflexionskörper vorteilhaft. Bevorzugt werden daher für Lichtschrankensysteme Reflexionskörper mit kugelförmiger bzw. zylinderförmiger Grundfläche in Kombination mit einer Reflektorfläche mit Tripelprismen bzw. einer Reflektorfolie eingesetzt, um eine gleichmäßige Lichtreflexion in zumindest zwei bzw. bevorzugt alle Richtungen zu ermöglichen.

Bevorzugt kann durch die Erfindung ein Fördersystem geschaffen werden, welches eine Förderstrecke mit zumindest zwei Bereichen und ein Lichtschrankensystem nach einer der genannten Ausführungsformen umfasst, wobei die Reflexions-Lichtschrankenvorrichtungen und der Reflexionskörper derart in Bezug auf die Förderstrecke angeordnet sind, dass zwei unterschiedliche Bereiche der Förderstrecke überwacht werden. Bisher war es üblich, entlang einer Förderstrecke mehrere Paare bestehend aus Reflexions-Lichtschrankenvorrichtung und Reflexionskörper entlang der Förderstrecke zu positionieren, um mehrere Bereiche zu überwachen. Aufgrund des geringen zur Verfügung stehenden Platzes bei Fördersystemen kann durch die erfindungsgemäße Lösung ein vorteilhaftes Fördersystem geschaffen werden.

Bei Fördersystemen liegen in der Regel zwei zueinander parallele Förderwege vor. In derartigen Anwendungsfällen wird bevorzugt, wenn der Reflexionskörper zwischen den Förderwegen und die Reflexions-Lichtschrankenvorrichtungen jeweils an einer dem Reflexionskörper abgewandten Seite der Förderwege angeordnet sind. Der erfindungsgemäße Reflexionskörper kann besonders klein ausgestaltet werden, sodass er sich leicht zwischen den Förderwegen positionieren lässt. Bevorzugt wird in dieser Ausführungsform zumindest eine Reflexions-Lichtschrankenvorrichtung eingesetzt, die in eine dritte Richtung Lichtstrahlen auf den Reflexionskörper ausstrahlt, die parallel zu einer Förderrichtung der beiden genannten Förderwege liegt.

In einem weiteren Aspekt betrifft die Erfindung eine Verwendung eines Reflexionskörpers in einem Lichtschrankensystem bzw. in einem Fördersystem, wobei hier dieselben Ausführungsformen wie oben beschrieben eingesetzt werden können.

Vorteilhafte und nicht einschränkende Ausführungsformen der Erfindung werden nachfolgend anhand der Zeichnungen näher erläutert.
Figur 1 zeigt ein Fördersystem mit einem erfindungsgemäßen Lichtschrankensystem in einer Draufsicht.
Figur 2 zeigt den Reflexionskörper des Lichtschrankensystems von Figur 1 im Detail.
Die Figuren 3 und 4 zeigen weitere Varianten des Fördersystems in schematischen Perspektivansichten.
Figur 5 zeigt eine alternative Ausführungsform des Reflexionskörpers von Figur 2.

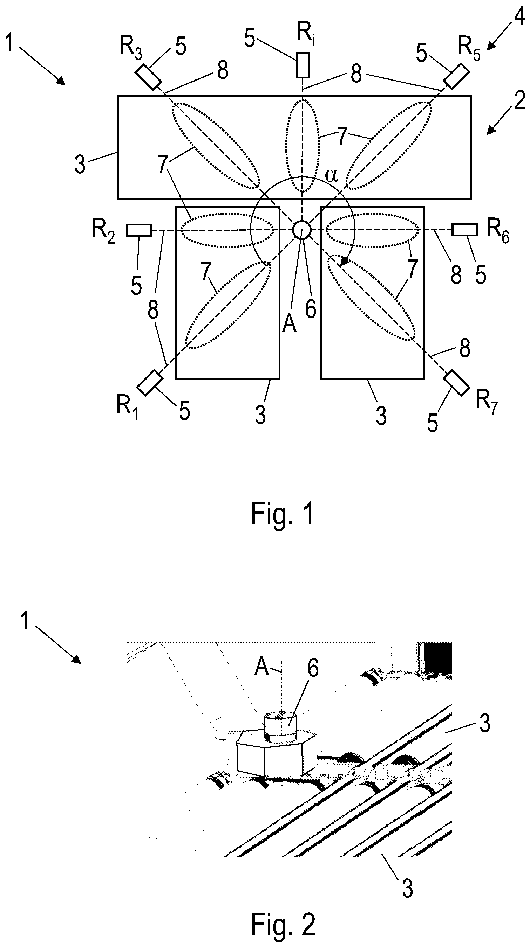

Figur 1 zeigt ein Fördersystem 1, welches eine Förderstrecke 2 mit mehreren Förderwegen 3 und ein Lichtschrankensystem 4 umfasst. Das dargestellte Lichtschrankensystem 4 umfasst sieben Reflexions-Lichtschrankenvorrichtungen 5 und einen Reflexionskörper 6, um zumindest zwei räumlich unterschiedliche Bereiche 7 zu überwachen. Das Lichtschrankensystem 4 ist im Folgenden für den Einsatz in einem Fördersystem 1 beschrieben, kann im Allgemeinen aber auch in anderen Gebieten zum Einsatz kommen, bei denen mehrere räumliche Bereiche 7 überwacht werden sollen.

Das Lichtschrankensystem 4 kann anstelle der dargestellten sieben Reflexions-Lichtschrankenvorrichtungen 5 im Allgemeinen zumindest zwei oder zumindest drei Reflexions-Lichtschrankenvorrichtungen 5 umfassen. Jede der Reflexions-Lichtschrankenvorrichtungen 5 umfasst hierbei eine Lichtstrahlenquelle zum Aussenden eines Lichtstrahls 8 und einen Sensor zur Detektion des vom Reflexionskörper 6 reflektierten Lichtstrahls 8. Der Sensor kann die Detektion des reflektierten Lichtstrahls 8 entweder dann anzeigen bzw. ausgeben, wenn der reflektierte Lichtstrahl 8 registriert wird, oder dann, wenn ein Ausbleiben des reflektierten Lichtstrahls 8 registriert wird.

Zusammen bilden der ausgesandte und der reflektierte Lichtstrahl 8 einen Lichtschranken. Der Lichtstrahl 8 bzw. der Lichtschranken können eine Wellenlänge aufweisen, die im sichtbaren Wellenlängenbereich oder im nicht-sichtbaren Wellenlängenbereich liegt. Insbesondere kann der Lichtstrahl 8 auch ein Laserstrahl sein. Um den Lichtstrahl 8 zu erzeugen, kann die Lichtstrahlenquelle beispielsweise eine Leuchtdiode umfassen, die den Lichtstrahl beispielsweise mit einer Wellenlänge von 660 nm (sichtbares rotes Licht) oder 880 bis 940 nm (nicht sichtbares Infrarotlicht) erzeugt.

Üblicherweise ist in einem Stand-der-Technik-Lichtschrankensystem für jede Reflexions-Lichtschrankenvorrichtung 5 ein eigener Reflektor vorgesehen, beispielsweise eine spiegelnde Scheibe. Für ein Stand-der-Technik-Lichtschrankensystem mit beispielsweise sieben Reflexions-Lichtschrankenvorrichtungen 5 würden somit sieben Reflektoren eingesetzt werden. Das erfindungsgemäße Lichtschrankensystem 4 weist für die zumindest zwei Reflexions-Lichtschrankenvorrichtungen 5 jedoch einen gemeinsamen Reflexionskörper 6 auf. Die Reflexions-Lichtschrankenvorrichtungen 5 sind hierzu derart angeordnet, dass sie Lichtstrahlen 8 aus unterschiedlichen Richtungen R1 ... R7, generell Ri, auf denselben Reflexionskörper 6 aussenden, um die zumindest zwei räumlich unterschiedlichen Bereiche 7 zu überwachen. Zumindest zwei der Reflexions-Lichtschrankenvorrichtungen 5 können derart angeordnet sein, dass diese Lichtstrahlen 8 auf den Reflexionskörper 6 aussenden, die in einem Winkel von zumindest 20°, zumindest 45°, zumindest 90° oder zumindest 180° auseinanderliegen.

Im in Figur 1 dargestellten Beispiel liegen die Richtungen Ri in verschiedenen Winkeln um eine in der Einbaulage des Lichtschrankensystems 4 vertikale Achse A und liegen somit in einer gemeinsamen Ebene. Die verschiedenen Winkel der Richtungen Ri liegen alle innerhalb eines vorbestimmten Winkelbereichs α. Alternativ könnten die Richtungen Ri auch in einer gemeinsamen Ebene liegen, die in der Einbaulage des Lichtschrankensystems 4 nicht horizontal verläuft, sondern beispielsweise vertikal, oder auch nicht in einer gemeinsamen Ebene liegen.

Der Reflexionskörper 6 ist derart ausgebildet, dass er aus zumindest zwei unterschiedlichen Richtungen Ri ausgesandte Lichtstrahlen 8 parallel zurückreflektieren kann. Dazu kann der Reflexionskörper 6 eine entsprechende Grundform und/oder eine entsprechende Oberflächenstruktur aufweisen. Beispielsweise liegen die Richtungen Ri in einem Winkel von zumindest 20°, zumindest 45°, zumindest 90° oder zumindest 180° auseinander.

Der Reflexionskörper 6 kann auch dazu ausgebildet sein, alle ausgesandten Lichtstrahlen 8 parallel zurückzureflektieren, die in einem vorbestimmten Winkelbereich α um die gemeinsame Achse A ausgesandt wurden. Der Winkelbereich α beträgt bevorzugt zumindest 180° oder zumindest 270°, besonders bevorzugt im Wesentlichen 360°. Dies kann zum Beispiel durch eine zylindrische oder kugelförmige Grundform des Reflexionskörpers 6 erzielt werden. Ist der Winkelbereich α kleiner als 360°, kann dafür auch ein Segment einer Zylinderform oder Kugelform eingesetzt werden. Auch könnte der Reflexionskörper 6 dazu ausgebildet sein, Lichtstrahlen 8 aus im Wesentlichen allen Richtungen Ri zurück zu reflektieren, was zum Beispiel durch eine kugelförmige Grundform des Reflexionskörpers 6 erzielt werden kann.

Figur 2 zeigt einen Reflexionskörper 6 mit einer im Wesentlichen zylindrischen Grundform. Unter einer im Wesentlichen zylindrischen Grundform wird eine im Wesentlichen linear extrudierte Grundfläche verstanden, die auch durch die Anreihung von ebenen Flächen gebildet werden kann, um die Zylinderform anzunähern. Reflexionskörper 6 mit zylindrischer Grundform eignen sich besonders dazu, Lichtstrahlen 8 zurückzureflektieren, die jeweils aus unterschiedlichen Richtungen Ri ausgesandt worden sind, die alle in einer gemeinsamen Ebene liegen.

Reflexionskörper 6 mit einer im Wesentlichen zylindrischen Grundform können beispielsweise eine kreisförmige Grundfläche aufweisen. Alternativ könnte die Grundfläche oval oder anders geformt sein. Die Grundfläche muss auch nicht stetig sein, sondern kann auch durch aneinandergereihte gerade Linien (Knicke) geformt sein. Der Winkel zwischen den geraden Linien ist hierbei beispielsweise kleiner als ein Reflexionswinkel einer Reflektorfolie oder einer Reflektorfläche wie unten beschrieben. Auch kann der zylindrische Grundkörper beispielsweise durch aneinandergereihte ebene Hexagone gebildet werden.

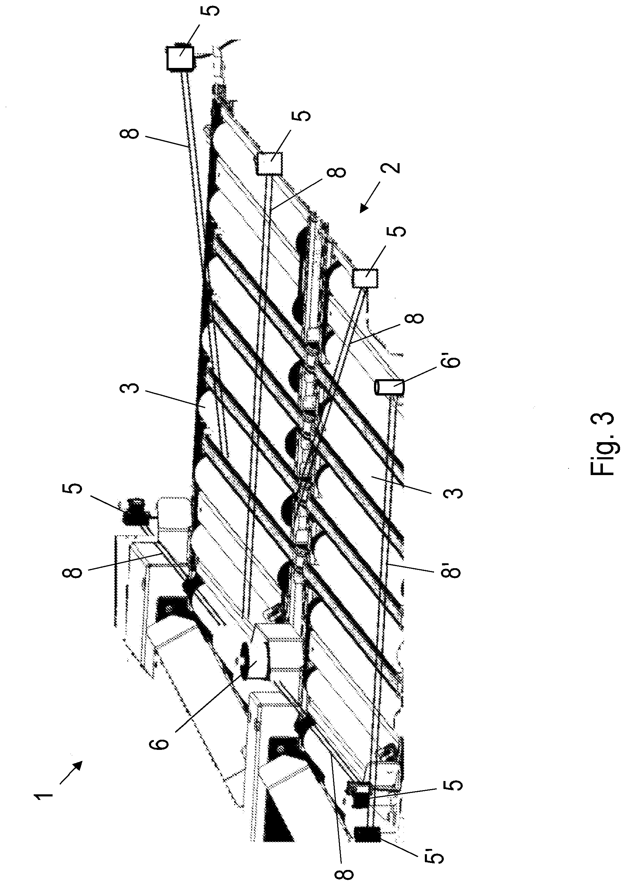

Figur 3 zeigt eine Variante des Fördersystems 1, bei welchem eine Förderstrecke 2 einen im Wesentlichen geraden ersten Förderweg 3 und einen parallel dazu verlaufenden zweiten Förderweg 3 aufweist. Der Reflexionskörper 6 ist hier derart angeordnet, dass er sich zwischen den beiden Förderwegen 3 befindet. Fünf Reflexions-Lichtschrankenvorrichtungen 5 sind derart auf den Reflexionskörper 6 gerichtet, dass einer der Lichtstrahlen 8 den ersten Förderweg 3 und einer der Lichtstrahlen 8 den zweiten Förderweg 3 schräg überquert. Zwei weitere Laserstrahlen 8 überqueren die ersten bzw. den zweiten Förderweg 3 normal zu den Förderwegen 3. Ein weiterer Laserstrahl 8 verläuft parallel zu den Förderwegen 3, jedoch zwischen diesen, um zu erkennen, ob ein Fördergut von einem Förderweg 3 auf den anderen Förderweg 3 wechselt.

Zudem ist in Figur 3 dargestellt, dass ein weiterer Reflexionskörper 6' und eine weitere Reflexions-Lichtschrankenvorrichtung 5' auf jener Seite des ersten Förderwegs 3 angeordnet sind, die dem zweiten Förderweg 3 abgewandt ist. Dadurch kann ein Lichtstrahl 8' parallel neben dem ersten Fahrweg 3 angeordnet sein und detektieren, wenn ein Fördergut vom Förderweg 3 abkommt.

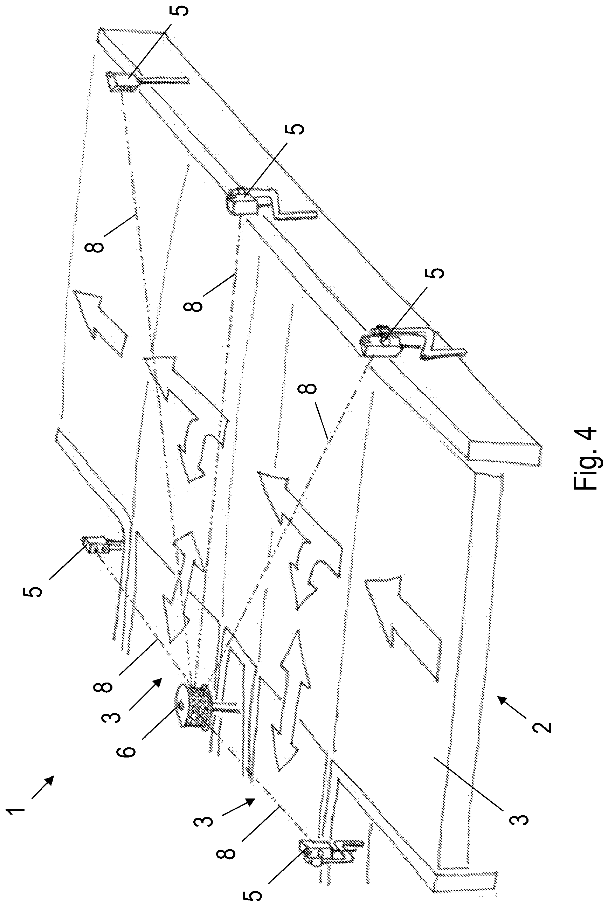

Figur 4 zeigt eine weitere Variante des Fördersystems 1, bei welchem eine Förderstrecke 2 einen im Wesentlichen geraden ersten Förderweg 3 mit einem zweiten und einem dritten Förderweg 3 aufweist, wobei der zweite und der dritte Förderweg 3 auf derselben Seite des ersten Förderwegs 3 anschließen und parallel zueinander verlaufen. Der Reflexionskörper 6 ist hier derart angeordnet, dass er sich zwischen den drei Förderwegen 3 befindet. Fünf Reflexions-Lichtschrankenvorrichtungen 5 sind derart auf den Reflexionskörper 6 gerichtet, dass einer der Lichtstrahlen 8 den zweiten Förderweg 3 und einer der Lichtstrahlen 8 den dritten Förderweg 3 überquert. Die weiteren drei Lichtstrahlen 8 überqueren den ersten Förderweg 3 derart, dass ein Abbiegebereich zum zweiten Förderweg 3, ein Abbiegebereich zum dritten Förderweg 3 und ein Bereich zwischen den beiden Abbiegebereichen überwacht wird.

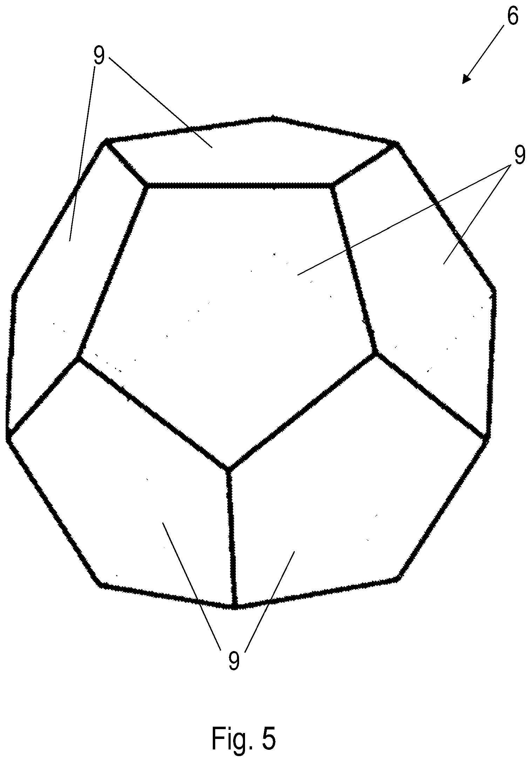

Figur 5 zeigt einen Reflexionskörper 6 mit einer im Wesentlichen kugelförmigen Grundform. Die kugelförmige Grundform ist hierbei durch ein Pentagondodekaeder angenähert. Ein Pentagondodekaeder hat zwölf ebene Oberflächen 9, d.h. zwölf Fünfecke, die sich besonders gut eignen, um auf diesen eine gewünschte Oberflächenstruktur einzuarbeiten bzw. um auf diesen eine Reflektorfolie aufzukleben. Alternativ könnte die kugelförmige Grundform auch rund mit stetiger Oberfläche sein.

Es versteht sich, dass der Reflexionskörper 6 auch eine Grundform haben kann, die durch ein Segment einer zylindrischen Grundform (Zylindersegment) oder durch ein Segment einer kugelförmigen Grundform (Kugelsegment) gebildet sein kann. Auch könnte der Reflexionskörper 6 eine Grundform haben, welche durch eine Halbkugel gebildet ist, die auf einen Zylinder aufgesetzt ist. Auch könnte der Reflexionskörper 6 eine quaderförmige oder würfelförmige Grundform haben.

Um die Eigenschaft, aus zwei unterschiedlichen Richtungen ausgesandte Lichtstrahlen parallel zurückzureflektieren, weiter zu verbessern, kann vorgesehen werden, die Oberfläche des Reflexionskörpers 6 mit einer Reflektorfläche oder einer Reflektorfolie auszustatten.

Die Reflektorfläche wird üblicherweise unmittelbar in die Oberfläche des Reflexionskörpers eingearbeitet, beispielsweise in Form von Tripelprismen. Eine Reflektorfolie kann hingegen auf die Oberfläche des Reflexionskörpers 6 aufgebracht, z.B. aufgeklebt, werden. Aus dem Stand der Technik ist beispielsweise bekannt, Glaskugeln mit einen Durchmesser von 50 µm auf eine spiegelnde Folie aufzubringen, um die Reflektorfolie zu bilden. Die Tripelprismen der Reflektorfläche bzw. die Glaskugeln der Reflektorfläche ermöglichen, dass alle einfallenden Lichtstrahlen parallel zurückreflektiert werden, die in einem vorbestimmten Reflexionswinkel zu einer Normalrichtung der Oberfläche einfallen. Da dieser Reflexionswinkel in der Regel weit unter 90° liegt, werden die Reflektorflächen bzw. die Reflektorfolien in Kombination mit einer zylindrischen oder kugelförmigen Grundform des Reflexionskörpers eingesetzt, um Reflexionswinkel von zumindest 180° bis zu 360° innerhalb einer Ebene zu erzielen bzw. um überhaupt Lichtstrahlen aus allen Raumrichtungen parallel zurück reflektieren zu können.

In Figur 1 ist wie erläutert dargestellt, dass das Lichtschrankensystem 4 mit den zumindest zwei Reflexions-Lichtschrankenvorrichtungen 5 und dem gemeinsamen Reflektor 6 in einem Fördersystem 1 mit einer Förderstrecke 2 mit mehreren Förderwegen 3 eingesetzt wird. Allgemeiner könnte das Lichtschrankensystem 4 auch bei einer Förderstrecke 2 eingesetzt werden, die aus einem einzigen geraden oder gekurvtem Förderweg 3 besteht. Hierbei würden die Reflexions-Lichtschrankenvorrichtungen 5 alle auf einer Seite des Förderwegs 3 und der Reflexionskörper 6 auf der anderen Seite des Förderwegs 3 angeordnet sein.

Wie in Figur 1 dargestellt, weist das Fördersystem 1 eine Förderstrecke 2 mit zwei zueinander parallelen Förderwegen 3 auf, wobei die Förderwege 3 dazu ausgebildet sein können, Fördergut in unterschiedliche Richtungen zu transportieren. Die beiden Förderwege 3 verbindend könnte ein Kommissionierplatz 10 vorgesehen werden, an dem das Fördergut von einer Kommissionierperson bearbeitet wird. Der dargestellte Kommissionierplatz 10 könnte aber auch als weiterer Förderweg 3 ausgebildet sein.

Im Ausführungsbeispiel mit zwei parallel zueinander verlaufenden Förderwegen 3 ist der Reflexionskörper 6 bevorzugt zwischen den Förderwegen 3 angeordnet. Die Reflexions-Lichtschrankenvorrichtungen 5 sind jeweils an einer dem Reflexionskörper 6 abgewandten Seite der Förderwege 3 angeordnet. Die Reflexions-Lichtschrankenvorrichtungen 5 können sich somit in vorteilhafter Weise einen gemeinsamen Reflexionskörper 6 teilen, um gleichzeitig mehrere räumliche Bereiche 7 der Förderstrecke 2 zu überwachen. Wenn ein im Wesentlichen normal zu den Förderwegen 3 verlaufender Kommissionierplatz 10 vorhanden ist, kann der Reflexionskörper 6 zwischen den zwei Förderwegen 3 und dem Kommissionierplatz 10 angeordnet werden. Die Reflexions-Lichtschrankenvorrichtungen 5 liegen hierbei an einer dem Reflexionskörper 6 abgewandten Seite der Förderwege 3 bzw. des Kommissionierplatzes 10.

## Patentansprüche

1. Lichtschrankensystem (4), umfassend zumindest zwei Reflexions-Lichtschrankenvorrichtungen (5), die jeweils dazu ausgebildet sind, einen Lichtstrahl (8) auszusenden und einen reflektierten Lichtstrahl (8) zu detektieren,
**dadurch gekennzeichnet, dass**
das Lichtschrankensystem (4) einen Reflexionskörper (6) umfasst, der dazu ausgebildet ist, aus zumindest zwei unterschiedlichen Richtungen (Ri) ausgesandte Lichtstrahlen (8) parallel zurückzureflektieren, welche in einem Winkel von zumindest 20° auseinanderliegen,
wobei die zumindest zwei Reflexions-Lichtschrankenvorrichtungen (5) derart angeordnet sind, dass sie Lichtstrahlen (8) aus unterschiedlichen Richtungen (Ri) auf denselben Reflexionskörper (6) aussenden, um zumindest zwei räumlich unterschiedliche Bereiche (7) zu überwachen.

2. Lichtschrankensystem (4) nach Anspruch 1, wobei der Reflexionskörper (6) dazu ausgebildet ist, alle ausgesandte Lichtstrahlen (8) parallel zurückzureflektieren, die in einem vorbestimmten Winkelbereich (α) um eine Achse (A) ausgesandt wurden, wobei der Winkelbereich (α) bevorzugt zumindest 180° beträgt, besonders bevorzugt im Wesentlichen 360°.

3. Lichtschrankensystem (4) nach Anspruch 1 oder 2, wobei der Reflexionskörper (6) eine im Wesentlichen kugelförmige Grundform hat und bevorzugt als Pentagondodekaeder ausgebildet ist.

4. Lichtschrankensystem (4) nach Anspruch 1 oder 2, wobei der Reflexionskörper (6) eine im Wesentlichen zylindrische Grundform mit bevorzugt kreisförmiger Grundfläche hat.

5. Lichtschrankensystem (4) nach einem der Ansprüche 1 bis 4, wobei zumindest ein Teil der Oberfläche des Reflexionskörpers (6) eingearbeitete Tripelprismen aufweist.

6. Lichtschrankensystem (4) nach einem der Ansprüche 1 bis 5, wobei zumindest ein Teil der Oberfläche des Reflexionskörpers (6) mit einer Reflektorfolie bedeckt ist.

7. Fördersystem (1), umfassend eine Förderstrecke (2) mit zumindest zwei Bereichen (7) und ein Lichtschrankensystem (4) nach einem der Ansprüche 1 bis 6, wobei die Reflexions-Lichtschrankenvorrichtungen (5) und der Reflexionskörper (6) derart in Bezug auf die Förderstrecke (2) angeordnet sind, dass zwei unterschiedliche Bereiche (7) der Förderstrecke (2) überwacht werden.

8. Fördersystem (1) nach Anspruch 7, wobei die Förderstrecke (2) zwei parallel zueinander verlaufende Förderwege (3) umfasst und wobei der Reflexionskörper (6) zwischen den Förderwegen (3) und die Reflexions-Lichtschrankenvorrichtungen (5) jeweils an einer dem Reflexionskörper (6) abgewandten Seite der Förderwege (3) angeordnet sind.

9. Verwendung eines Reflexionskörpers (6) in einem Lichtschrankensystem (4), wobei der Reflexionskörper (6) dazu ausgebildet ist, aus zwei unterschiedlichen Richtungen (Ri) ausgesandte Lichtstrahlen (8) parallel zurückzureflektieren, welche in einem Winkel von zumindest 20° auseinanderliegen, wobei das Lichtschrankensystem (4) zumindest zwei Reflexions-Lichtschrankenvorrichtungen (5) umfasst, die jeweils dazu ausgebildet sind, einen Lichtstrahl (8) auszusenden und einen reflektierten Lichtstrahl (8) zu detektieren, wobei die zumindest zwei Reflexions-Lichtschrankenvorrichtungen (5) des Lichtschrankensystems (4) Lichtstrahlen (8) aus unterschiedlichen Richtungen (Ri) auf denselben Reflexionskörper (6) aussenden, um zumindest zwei räumlich unterschiedliche Bereiche (7) zu überwachen.

10. Verwendung nach Anspruch 9, wobei der Reflexionskörper (6) dazu ausgebildet ist, alle ausgesandte Lichtstrahlen (8) parallel zurückzureflektieren, die in einem vorbestimmten Winkelbereich um eine Achse (A) ausgesandt wurden, wobei der Winkelbereich bevorzugt zumindest 180° beträgt, besonders bevorzugt im Wesentlichen 360°.

11. Verwendung nach Anspruch 9 oder 10, wobei der Reflexionskörper (6) eine im Wesentlichen kugelförmige Grundform hat und bevorzugt als Pentagondodekaeder ausgebildet ist.

12. Verwendung nach Anspruch 9 oder 10, wobei der Reflexionskörper (6) eine im Wesentlichen zylindrische Grundform mit bevorzugt kreisförmiger Grundfläche hat.

13. Verwendung nach einem der Ansprüche 9 bis 12, wobei zumindest ein Teil der Oberfläche des Reflexionskörpers (6) eingearbeitete Tripelprismen aufweist.

14. Verwendung nach einem der Ansprüche 9 bis 13, wobei zumindest ein Teil der Oberfläche des Reflexionskörpers (6) mit einer Reflektorfolie bedeckt ist.

15. Verwendung nach einem der Ansprüche 9 bis 14, wobei das Lichtschrankensystem (4) in Kombination mit einer Förderstrecke (2) eines Fördersystems (1) mit zumindest zwei Bereichen (7) eingesetzt wird, wobei die Reflexions-Lichtschrankenvorrichtungen (5) und der Reflexionskörper (6) derart in Bezug auf die Förderstrecke (2) angeordnet sind, dass zwei unterschiedliche Bereiche (7) der Förderstrecke (2) überwacht werden.

16. Verwendung nach Anspruch 15, wobei die Förderstrecke (2) zwei parallel zueinander verlaufende Förderwege (3) umfasst und wobei der Reflexionskörper (6) zwischen den Förderwegen (3) und die Reflexions-Lichtschrankenvorrichtungen (5) jeweils an einer dem Reflexionskörper (6) abgewandten Seite der Förderwege (3) angeordnet sind.

## Claims

1. A light barrier system (4) comprising at least two reflection light barrier devices (5), which each configured to emit a light beam (8) and to detect a reflected light beam (8),
**characterized in that**
the light barrier system (4) comprises a reflection body (6), which is configured to reflect back in parallel light beams (8) emitted from at least two different directions (Ri), which are spaced apart at an angle of at least 20°, wherein the at least two reflection light barrier devices (5) are arranged in such a way that they emit light beams (8) from different directions (Ri) onto the same reflection body (6) in order to monitor at least two spatially different areas (7).

2. A light barrier system (4) according to claim 1, wherein the reflection body (6) is configured to reflect back in parallel all emitted light beams (8), which have been emitted within a predetermined angular range (α) about an axis (A), wherein the angular range (α) is preferably at least 180°, particularly preferably substantially 360°.

3. A light barrier system (4) according to claim 1 or 2, wherein the reflection body (6) has a substantially spherical basic shape and is preferably formed as a pentagonal-dodecahedron.

4. A light barrier system (4) according to claim 1 or 2, wherein the reflection body (6) has a substantially cylindrical basic shape with a preferably circular base.

5. A light barrier system (4) according to any of the claims 1 to 4, wherein at least a part of the surface of the reflection body (6) has incorporated triple prisms.

6. A light barrier system (4) according to any of the claims 1 to 5, wherein at least a part of the surface of the reflection body (6) is covered by a reflector foil.

7. A conveyor system (1) comprising a conveyor section (2) having at least two areas (7) and a light barrier system (4) according to any one of the claims 1 to 6, wherein the reflection light barrier devices (5) and the reflection body (6) are arranged with respect to the conveyor section (2) in such a way that two different areas (7) of the conveyor section (2) are being monitored.

8. A conveyor system (1) according to claim 7, wherein the conveyor section (2) comprises two conveyor paths (3) running in parallel to one another and wherein the reflection body (6) is arranged between the conveyor paths (3) and the reflection light barrier devices (5), which are respectively arranged on a side of the conveyor paths (3) facing away from the reflection body (6).

9. Use of a reflection body (6) in a light barrier system (4), wherein the reflection body (6) is configured to reflect back light beams (8) emitted from two different directions (Ri) in parallel, which are spaced apart at an angle of at least 20°, wherein the light barrier system (4) comprises at least two reflection light barrier devices (5), which are each configured to emit a light beam (8) and to detect a reflected light beam (8), wherein the at least two reflection light barrier devices (5) of the light barrier system (4) emit light beams (8) from different directions (Ri) onto the same reflection body (6) in order to monitor at least two spatially different areas (7).

10. Use according to claim 9, wherein the reflection body (6) is designed to reflect back in parallel all emitted light beam (8), which have been emitted within a predetermined angular range about an axis (A), wherein the angular range is preferably at least 180°, particularly preferably substantially 360°.

11. Use according to claim 9 or 10, wherein the reflection body (6) has a substantially spherical basic shape and is preferably formed as a pentagonal-dodecahedron.

12. Use according to claim 9 or 10, wherein the reflection body (6) has a substantially cylindrical basic shape with a preferably circular base.

13. Use according to any of the claims 9 to 12, wherein at least a part of the surface of the reflection body (6) has incorporated triple prisms.

14. Use according to any of the claims 9 to 13, wherein at least a part of the surface of the reflection body (6) is covered by a reflective foil.

15. Use according to any of the claims 9 to 14, wherein the light barrier system (4) is used in combination with a conveyor section (2) of a conveyor system (1) having at least two areas (7), wherein the reflection light barrier devices (5) and the reflection body (6) are arranged with respect to the conveyor section (2) in such a way that two different areas (7) of the conveyor section (2) are being monitored.

16. Use according to claim 15, wherein the conveyor section (2) comprises two conveyor paths (3) running in parallel to each other, and wherein the reflection body (6) is arranged between the conveyor paths (3) and the reflection light barrier devices (5) respectively on a side of the conveyor paths (3) facing away from the reflection body (6).

## Revendications

1. Système de barrière lumineuse (4) comprenant au moins deux dispositifs de barrière lumineuse de réflexion (5) qui sont chacun configurés pour émettre un faisceau lumineux (8) et pour détecter un faisceau lumineux (8) réfléchi,
**caractérisé en ce que**
ce système de barrière lumineuse (4) comprend un corps réfléchissant (6) qui est conçu pour réfléchir parallèlement des faisceaux lumineux (8) émis depuis deux directions (Ri) différentes qui forment entre eux un angle d'au moins 20°, les au moins deux dispositifs de barrière lumineuse de réflexion (5) étant disposés de telle sorte qu'ils émettent des faisceaux lumineux (8) depuis des directions (Ri) différentes sur le même corps réfléchissant (6) pour surveiller au moins deux zones spatiales (7) différentes.

2. Système de barrière lumineuse (4) selon la revendication 1, dans lequel le corps réfléchissant (6) est conçu pour refléter parallèlement tous les faisceaux lumineux (8) émis qui ont été émis sur une plage angulaire prédéfinie (α) autour d'un axe (A), cette plage angulaire (α) étant de préférence d'au moins 180° et de manière particulièrement préférée d'environ 360°.

3. Système de barrière lumineuse (4) selon la revendication 1 ou 2, dans lequel le corps réfléchissant (6) a une forme de base sensiblement sphérique et est configuré de préférence comme un dodécaèdre pentagonal.

4. Système de barrière lumineuse (4) selon la revendication 1 ou 2, dans lequel le corps réfléchissant (6) a une forme de base sensiblement cylindrique avec de préférence une surface de base circulaire.

5. Système de barrière lumineuse (4) selon une des revendications 1 à 4, dans lequel au moins une partie de la surface du corps réfléchissant (6) comporte des prismes triples incorporés.

6. Système de barrière lumineuse (4) selon une des revendications 1 à 5, dans lequel au moins une partie de la surface du corps réfléchissant (6) est recouverte d'un film réfléchissant.

7. Système de convoyage (1) comprenant une ligne de convoyage (2) avec au moins deux zones (7) et un système de barrière lumineuse (4) selon une des revendications 1 à 6, dans lequel les dispositifs de barrière lumineuse de réflexion (5) et le corps réfléchissant (6) sont disposés de telle sorte par rapport à la ligne de convoyage (2) que deux zones (7) différentes de la ligne de convoyage (2) sont surveillées.

8. Système de convoyage (1) selon la revendication 7, dans lequel la ligne de convoyage (2) comprend deux voies de convoyage (3) courant parallèlement entre elles et dans lequel le corps réfléchissant (6) est disposé entre les voies de convoyage (3) et les dispositifs de barrière lumineuse de réflexion (5) chacun sur un côté des voies de convoyage (3) opposé au corps réfléchissant (6).

9. Utilisation d'un corps réfléchissant (6) dans un système de barrière lumineuse (4), ce corps réfléchissant (6) étant conçu pour réfléchir parallèlement des faisceaux lumineux (8) émis depuis deux directions (Ri) différentes qui forment entre eux un angle d'au moins 20°, le système de barrière lumineuse (4) comprenant au moins deux dispositifs de barrière lumineuse de réflexion (5) qui sont chacun configurés pour émettre un faisceau lumineux (8) et pour détecter un faisceau lumineux (8) réfléchi, les au moins deux dispositifs de barrière lumineuse de réflexion (5) du système de barrière lumineuse (4) émettant des faisceaux lumineux (8) depuis des directions (Ri) différentes sur le même corps réfléchissant (6) pour surveiller au moins deux zones spatiales (7) différentes.

10. Utilisation selon la revendication 9, le corps réfléchissant (6) étant conçu pour refléter parallèlement tous les faisceaux lumineux (8) émis qui ont été émis sur une plage angulaire prédéfinie autour d'un axe (A), cette plage angulaire étant de préférence d'au moins 180° et de manière particulièrement préférée d'environ 360°.

11. Utilisation selon la revendication 9 ou 10, le corps réfléchissant (6) ayant une forme de base sensiblement sphérique et étant configuré de préférence comme un dodécaèdre pentagonal.

12. Utilisation selon la revendication 9 ou 10, le corps réfléchissant (6) ayant une forme de base sensiblement cylindrique avec de préférence une surface de base circulaire.

13. Utilisation selon une des revendications 9 à 12, au moins une partie de la surface du corps réfléchissant (6) comportant des prismes triples incorporés.

14. Utilisation selon une des revendications 9 à 13, au moins une partie de la surface du corps réfléchissant (6) étant recouverte d'un film réfléchissant.

15. Utilisation selon une des revendications 9 à 14, le système de barrière lumineuse (4) étant utilisé en combinaison avec une ligne de convoyage (2) d'un système de convoyage dotée d'au moins deux zones (7), les dispositifs de barrière lumineuse de réflexion (5) et le corps réfléchissant (6) étant disposés de telle sorte par rapport à la ligne de convoyage (2) que deux zones (7) différentes de la ligne de convoyage (2) sont surveillées.

16. Utilisation selon la revendication 15, la ligne de convoyage (2) comprenant deux voies de convoyage (3) courant parallèlement entre elles et le corps réfléchissant (6) étant disposé entre les voies de convoyage (3) et les dispositifs de barrière lumineuse de réflexion (5) chacun sur un côté des voies de convoyage (3) opposé au corps réfléchissant (6).
